# EUROPEAN PATENT APPLICATION

(11) **EP 1 858 237 A2**
(43) Date of publication of application: **21.11.2007**
(21) Application number: 07252055.4
(22) Date of filing: 18.05.2007
(51) Int. Cl.: H04M 1/04, H05K 5/02

(54) **Improvements in or relating to devices**

(30) Priority: 19.05.2006 US 437272
(71) Applicant: Nokia Corporation, 02150 Espoo (FI)
(72) Inventor: Schellen, Joeske, Clapham London SW12 8SE (GB)
(74) Representative: Khan, Mohammed Saiful Azam

(57) **Abstract**

A user portable electronic device comprises a first electronic display configured to electronically display, positioned to be viewed from a first face of the electronic device, the first face being viewed during normal operation of the electronic device, and a second electronic display configured to display, wherein the second electronic display is arranged to be viewable during wearing of the electronic device. A user portable electronic device is also described having an electronic display and a reflector, the reflector arrangeable to reflect images displayed on the electronic display to a different viewing orientation than that for directly viewing the electronic display.

## Description

### Field of the Invention

The present invention relates to improvements in or relating to devices, in particular hand-held electronic devices with electronic displays. Although hand-held electronic devices can be hand-held in use, these devices do not have to be hand-held when in use. These devices are readily user portable. Associated methods are also within the present disclosure, including methods of assembly.

The electronic devices according to the invention may provide one or more of functionalities including but not limited to radiotelephone (communications), audio/image (still and/or video) capturing/recording/playing functionality. Thus, electronic devices which can make telephone/video calls, play/record still/video images (e.g. still/video camera functionality, possibly but not always with sound) and/or play/record music audio (e.g. MP3 or other format audio player/recorder) are within the scope of the present invention.

The invention can also be applied to electronic devices which allow a user to play electronic games which can be displayed on a display on the electronic device or on a display separate to the electronic device. The electronic devices of the present invention may provide remote control functionality of another electronic device, so for example, the electronic device can control a robot (e.g. to control the movement or one or more other operation of the robot) and/or a television (e.g. to control the channel being displayed or one or more of the other operation performable with/by the television).

### Background to the Present Invention

User portable electronic devices are being increasingly worn as pendants. This is done by attaching the electronic devices to chords to allow them to be worn around the neck of a user. Such electronic devices may not necessarily be worn around the neck of a user but can hang off a belt or belt loop. When in the hanging position, such devices are not convenient to use. For example, the device display can not be viewed without first moving the device out of the hanging position.

Electronic devices have electronic displays to allow a user to view one or more of the operations performed by the electronic device. As electronic devices are increasingly carried, there is a need to keep devices small and compact. There are also cost pressures to reduce the number of expensive components, such as displays.

Electronic displays are mounted to a Printed Wiring Board (PWB) such that the viewing face of an electronic display is parallel to the component face of the PWB.

### Summary of the Invention

According to a first aspect, the present invention provides a user portable electronic device comprising a first electronic display positioned to be viewed from a first face of the electronic device, the first face being viewed during normal operation of the electronic device, and a second display, wherein the second display is arranged to be viewable during wearing of the electronic device.

When the device is worn, it will hang down. The second display is arranged so that a user can look down and view the second display without having to orientate the device to view the first face upon which is located the first display.

During wearing, the functionality provided by the electronic device may be limitable by a user so that accidental activation of one or more of the functions of the device is inhibited. This may be for example by key locking the user interface to prevent accidental activation of the device by the user. The device may still be operational to perform one or more functions, e.g. play a video on one or more of the displays, receive a telephone call, and/or play audio music.

The second display may be provided on a face, the face comprising an attachment member, the attachment member being arranged to allow the device to be directly or indirectly (e.g. via a chord) used for carrying/wearing. The attachment member can be a hook or ring or be an integral fastening member allowing the device to be fastened to, for example, an article of clothing.

The electronic device may be a monoblock construction or a foldable (e.g. "flip-phones") construction. The electronic device may have a swivel and/or slide construction.

The first display may be positioned to be viewed from a major face of the device and the second display to be viewed from a minor face of the device. The major face can be considered to be the main face of the electronic device which is ordinarily presented to a user during normal use of the device, and the minor face a side face which is not ordinarily presented to a user during normal use but which is presented to a user during carrying/wearing of the device.

The electronic device major face may be substantially parallel to a component face of the PWB. The electronic device minor face may be substantially perpendicular to a component face of the PWB.

The second display may be an electronic display.

The first and second displays may be operable to be independent of one another so that they display independent images. Items displayed on the second display may be completely different to items on the first display.

One or more items displayed on the first or second display may also be displayed on the other of the second or first display.

The first and second displays may be arranged to independently generate images.

The second display may be a projection screen arrangeable to receive one or more image reflections of one or more items displayed on the first electronic display.

The image reflection from the first electronic display may be provided by a reflector positioned in proximity to the first electronic display to extend out of the face of the PWB comprising the first electronic display.

According to a second aspect, the present invention provides a user portable electronic device comprising an electronic display and a reflector, the reflector arrangeable to reflect the images displayed on the electronic display to a different viewing orientation than that for directly viewing the electronic display.

Although the display may be viewable directly, it is possible by using the reflector to provide another viewing orientation for one or more of the images on the display. This means that the electronic display does not have to be moved to view the image it is displaying, for example, when it is being carried/worn. People standing at different positions with respect to the display can view the same displayed image, one person by directly viewing the display and the other by viewing the reflected image.

The viewing face of the electronic display may be arranged parallel to the PWB to which the electronic display is attached.

The reflector may comprise a mirror finish to reflect images from the electronic display.

The device may comprise a projection screen arrangeable to receive an image reflected by the reflector.

The reflector may be arrangeable to have a number of positions to reflect the displayed images to a corresponding number of viewing orientations.

The projection screen may be arrangeable to have a number of positions to receive images reflected at differing angles.

The projection screen may be attached to the display PWB or to the exterior housing of the electronic device.

The position of the reflector and/or the projection screen may be fixed.

The display may be aligned with a major face of the electronic device and the reflector may be arranged to reflect the image towards a minor face of the device. '

According to a third aspect the present invention provides a PWB comprising an electronic display attached with a viewing face parallel to a component face of the PWB, wherein the PWB comprises a reflector positioned in proximity to the viewing face of the electronic display to reflect one or more items from an image from the viewing face of the display to a viewing position substantially parallel to the viewing face of the display.

The PWB may comprise a projection screen arranged to extend out of the face of the PWB to receive one or more reflected items from an image on the display.

Corresponding means for performing the functions described are within the scope of the present disclosure.

Each feature in isolation and in all various combinations are within the scope of the present disclosure, whether or not specifically mentioned (or claimed) in that combination. Features from one or more aspects and embodiments can be taken in isolation or various combinations. Associated methods, including methods of assembly are also within the present disclosure.

### Brief Description of the Figures

Specific embodiments of the invention will now be described with reference to the following in which :
Figure 1 illustrates an embodiment according to the first aspect of the invention; and
Figure 2 illustrates an embodiment according to the second aspect of the invention.

### Description of Specific Embodiments

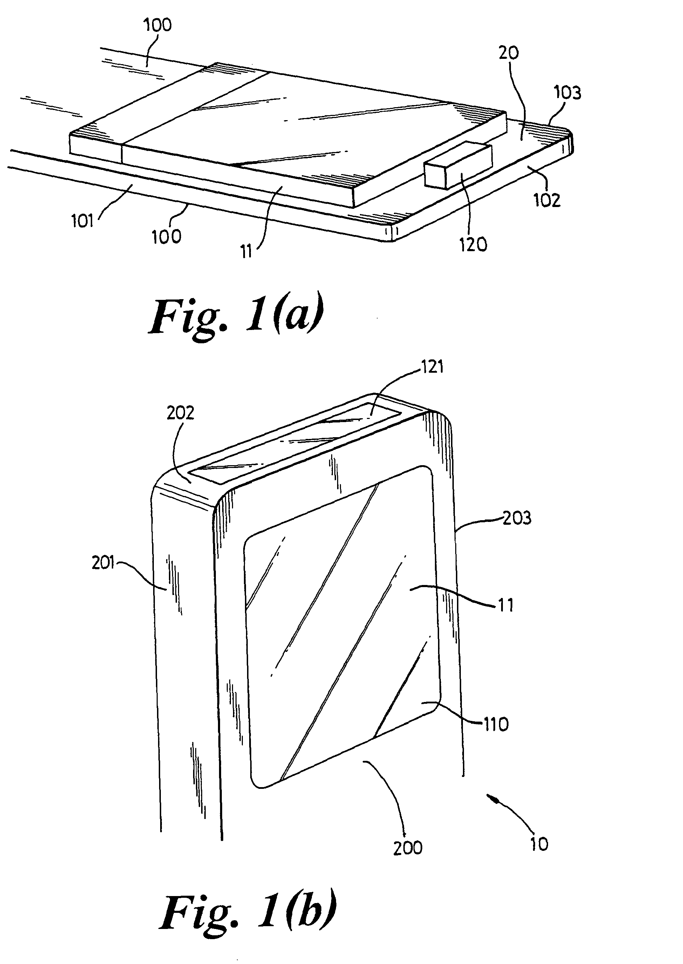

Figure 1 illustrates particular embodiments according to a first aspect of the invention. The exterior of a user portable electronic device 10 according to one embodiment of the invention is shown in Figure 1(b),and some of the internal components of the electronic device 10 are shown in Figure 1(a).

The electronic device 10 is substantially rectangular in shape with front and rear major faces 200 and lateral minor faces 201-204 (204, not shown in Figure 1(b)). It will be appreciated that the present invention is not limited to rectangular shaped electronic devices but encompasses other shapes including those of a more irregular geometric shape.

The front major face 200 comprises a number of user interface elements including a display aperture 110, behind which is located a first display 11, and input elements (e.g. keys, not shown). In another embodiment, the display 11 may be actuatable by a user to provide user input to the electronic device.

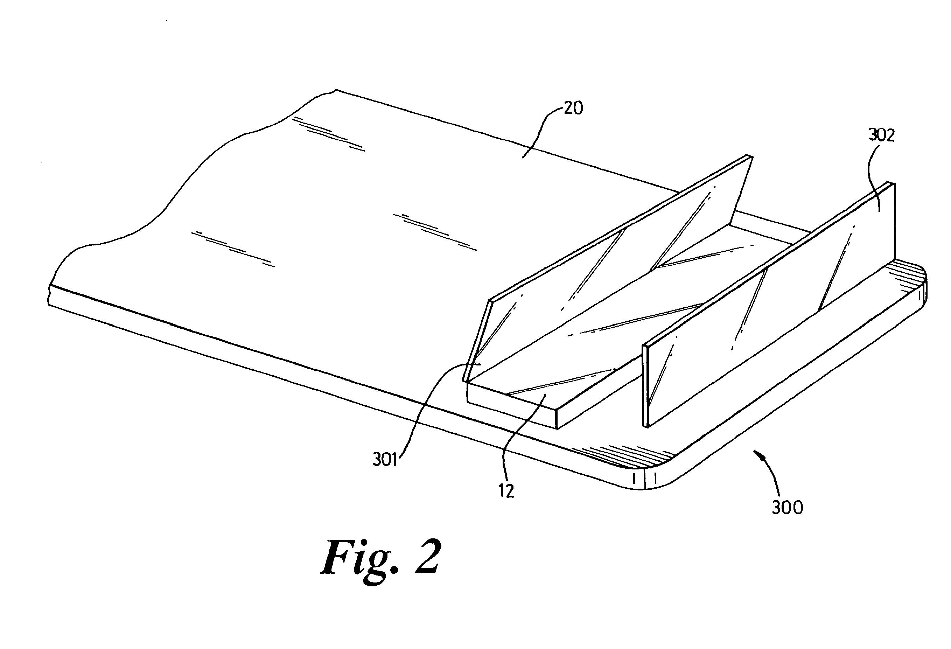

One of the minor faces 202 is also arranged to display images by making use of a second display 12 comprised in a second display unit 120. Thus, the second display unit 120 is arranged to provide a different viewing angle than the first display 11. In this particular embodiment, the second display unit 120 uses a second electronic display 12 and a reflection mechanism (discussed in relation to Figure 2). In other embodiment (not shown), the electronic device 10 may not use two independent displays 11, 12 but use a single electronic display to reflect items from the single electronic display to two or more different viewing angles (i.e. the display 12 may be used to provide viewing angles through apertures 110 and 121).

The minor face 202 of the electronic device 10 comprises an attachment member (not shown) used to allow the device 10 to be attached to a fastening element which can be directly or indirectly used to attach the device to a user when the device is being worn. In use, as the device 10 hangs from the attachment member, the display 12 viewable using the projection display aperture 121.

A PWB 20 is housed within the electronic device 10. The PWB 20 is rectangular in shape and comprises two opposing major faces 100 and four lateral minor faces 101-104 (104, not shown). Numerous electronic components are attached to the major faces of the PWB 100 (the components can be attached to one or both of the major faces 100. When assembled, the major and minor faces of the PWB 20 and the device 10 are aligned.

The first electronic display 11 is attached to the PWB so that the viewing face of the display 11 is parallel to one of the component faces of the PWB 20 (Figure 1 (a)). This display 11 has a front viewing face which is provides images to be viewed by a user. The PWB 20 is arranged so that the front viewing face of the display 11 can be viewed through the transparent aperture 110 located on the major face 200 of the exterior casing of the electronic device 10.

The PWB 20 also comprises the second display unit 120 attached to the same component face of the PWB 20 as the first display 11. In other embodiments, the displays 11, 12 (and display unit 120) could be attached to different component faces of the PWB 20. The second display 12 is provided towards one end of the PWB 20 and also attached to be parallel to the component face of the PWB 20. A reflector arrangement 300 is used in the display unit 120 to orientate the images provided on the second display 12 so that they can be viewed from a different viewing angle than viewing the front face of the display 12. In the embodiment of Figures 1 and 2, the image from display 12 is viewable parallel (rather than perpendicular) to the major face of the electronic display 12.

Figure 2 shows a close up of the internal components of the display unit 120. The display unit 120 comprises a display 12, a reflective mirror 301 and a projection screen 302. The reflective mirror is arranged to take one or more (possibly all) items which are displayed on display 12 and reflect them so that they can be viewed from a viewing position which is not substantially perpendicular to the front face of the display 12. The projection screen 302 is provided to receive the reflected image from the display via the reflector 301. In this particular embodiment, a separate projection screen 302 is provided to the display aperture 121. In other embodiments, the display aperture (which can itself be a screen) 121 which is located within the housing of the device 10 can be the projection screen 302 (i.e. no separate projections screen 302 is required on the PWB 20. The projection screen 302/121 can be considered to be a display rather than an electronic display.

Although the particular embodiments shown are in relation to a single reflector 301, the reflector can comprise one or more reflective elements to reflect the image to the required viewing position.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

In view of the foregoing description it will be evident to a person skilled in the art that various modifications may be made within the scope of the invention. For example, the reflector/projection screen can be arranged to be user-moveable into a number of different reflecting positions, and thus a number of different viewing angles. The reflector and/or the projection screen may not be mounted on the PWB but may be mounted to the housing of the electronic device.

While there have been shown and described and pointed out fundamental novel features of the invention as applied to preferred embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. A user portable electronic device comprising a first electronic display positioned to be viewed from a first face of the electronic device, the first face being viewed during normal operation of the electronic device, and a second display, wherein the second display is arranged to be viewable during wearing of the electronic device.

2. A device according to claim 1 wherein, during wearing, the functionality provided by the electronic device is user limitable so that accidental activation of one or more of the functions of the device is inhibited.

3. A device according to claim 1 wherein the second display is provided on a face which comprises an attachment member, the attachment member being arranged to allow the device to be indirectly used for carrying

4. A device according to claim 1 wherein the electronic device is of a monoblock construction.

5. A device according to claim 1 wherein the electronic device is of a foldable construction

6. A device according to claim 1 wherein the first display is positioned to be viewed from on a major face of the device and the second display is arranged to be viewed from on a minor face of the device.

7. A device according to claim 1 wherein the electronic device major face is substantially parallel to a component face of a printed wiring board to which the first electronic display is attached.

8. A device according to claim 1 wherein the electronic device minor face is substantially perpendicular to a component face of a printed wiring board to which the first electronic display is attached.

9. A device according to claim 1 wherein the second display is an electronic display.

10. A device according to claim 1 wherein the first and second displays are operable to be independent of one another so that they display completely different images.

11. A device according to claim 1 wherein one or more items displayed on the first or second display is also displayed on the other of the second or first display.

12. A device according to claim 1 wherein the first and second displays are arranged to independently generate images.

13. A device according to claim 1 wherein the second display is a projection screen arrangeable to receive one or more image reflections of one or more items displayed on the first electronic display.

14. A device according to claim 1 wherein the device comprises a reflector arranged to provide image reflection from the first electronic display to the second display, the reflector being positioned in proximity to the first electronic display to extend out of the face of a PWB comprising the first electronic display.

15. A user portable electronic device comprising an electronic display and a reflector, the reflector arrangeable to reflect images displayed on the electronic display to a different viewing orientation than that for directly viewing the electronic display.

16. The device of claim 15, wherein the viewing face of the electronic display is arranged parallel to a printed wiring board to which the electronic display is attached.

17. The device of claim 15, wherein the reflector comprises a mirror finish to reflect images from the electronic display.

18. The device of claim 15, wherein the device comprises a projection screen arrangeable to receive an image reflected by the reflector.

19. The device of claim 18, wherein the projection screen is attached to a printed wiring board to which the first electronic display is attached.

20. The device of claim 18, wherein the projection screen is attached to the exterior housing of the electronic device.

21. The device of claim 15, wherein the display is aligned with a major face of the electronic device and the reflector is arranged to reflect the image towards a minor face of the device.

22. A printed wiring board comprising an electronic display attached with a viewing face parallel to a component face of the printed wiring board, wherein the printed wiring board comprises a reflector positioned in proximity to the viewing face of the electronic display to reflect one or more items from an image from the viewing face of the display to a viewing position substantially parallel to the viewing face of the display.

23. A printed wiring board according to claim 22, wherein the printed wiring board comprises a projection screen arranged to extend out of the face of the printed wiring board to receive one or more reflected items from an image on the display.

24. A user portable electronic device comprising a first means for electronically displaying positioned to be viewed from a first face of the electronic device, the first face being viewed during normal operation of the electronic device, and a second means for displaying, wherein the second means for displaying is arranged to be viewable during wearing of the electronic device.

25. A user portable electronic device comprising a first means for electronically displaying and a mean for reflecting, the means for reflecting being arrangeable to reflect the images displayed on the means for electronically displaying to a different viewing orientation than that for directly viewing the means for electronically displaying.

26. A printed wiring board comprising a means for electronically displaying attached with a viewing face parallel to a component face of the printed wiring board, wherein the printed wiring board comprises a means for reflecting positioned in proximity to the viewing face of the means for electronically displaying to reflect one or more items from an image from the viewing face of the means for displaying to a viewing position substantially parallel to the viewing face of the means for displaying.

27. A method of assembling a user portable electronic device, the device comprising a first electronic display positioned to be viewed from a first face of the electronic device, the first face being viewed during normal operation of the electronic device, and a second display, wherein the second display is arranged to be viewable during wearing of the electronic device, wherein the method comprises assembling the device such that the first electronic display is positioned to be viewed from the first face of the device, and the second display is arranged to be viewable during normal wearing of the device.

28. A method of assembling a user portable electronic device, the device comprising an electronic display and a reflector, the reflector arrangeable to reflect images displayed on the electronic display to a different viewing orientation than that for directly viewing the electronic display, wherein the method comprises assembling the device such that the reflector reflects images displayed on the electronic display to a different viewing orientation than that for directly viewing the electronic display.

29. A method of assembling a printed wiring board, the board comprising an electronic display attached with a viewing face parallel to a component face of the printed wiring board, wherein the printed wiring board comprises a reflector positioned in proximity to the viewing face of the electronic display to reflect one or more items from an image from the viewing face of the display to a viewing position substantially parallel to the viewing face of the display, wherein the method comprises assembling the board such that the reflector is in proximity to the viewing face of the display to reflect one or more items from an image from the viewing face of the display to a viewing position substantially parallel to the viewing face of the display.
